# EUROPÄISCHE PATENTSCHRIFT

(11) **EP 3 784 439 B1**
(45) Veröffentlichungstag und Bekanntmachung des Hinweises auf die Patenterteilung: **01.06.2022**
(21) Anmeldenummer: 19721237.6
(22) Anmeldetag: 25.04.2019
(51) Int. Cl.: B25B 7/14

(54) **ZANGE**
PLIERS
PINCE

(30) Priorität: 26.04.2018 DE 102018110106
(43) Veröffentlichungstag der Anmeldung: 03.03.2021
(73) Patentinhaber: Knipex-Werk C. Gustav Putsch KG, 42349 Wuppertal (DE)
(72) Erfinder: LIEDTKE, Tim, 42653 Solingen (DE)
(74) Vertreter: Müller, Enno
(86) Internationale Anmeldenummer: PCT/EP2019/060597
(87) Internationale Veröffentlichungsnummer: WO 2019/207033

(56) Entgegenhaltungen:
- DE-A1-102010 000 558
- DE-A1-102011 052 926
- DE-U1-202017 107 442

## Beschreibung

### Gebiet der Technik

Die Erfindung betrifft eine Zange mit einem ersten und einem zweiten Zangenschenkel, die in einem Gelenkbereich um eine Drehachse drehbar zueinander gehaltert sind und auf einer Seite des Gelenkbereiches Griffbereiche ausbilden sowie auf der anderen Seite ein Zangenmaul, wobei eine Stellung der Zange, typischerweise eine Geschlossenstellung, durch ein Verriegelungsteil festsetzbar ist, wobei weiter das Verriegelungsteil an dem ersten Zangenschenkel an einem Übergang von dem Griffbereich zu dem Gelenkbereich dieses Zangenschenkels drehbar gehaltert ist und in der festgesetzten Stellung durch eine Anlage an dem Gelenkbereich des zweiten Zangenschenkels die Zange festsetzt.

### Stand der Technik

Zangen der in Rede stehenden Art sind in unterschiedlichen Ausführungen bekannt, so beispielsweise in Form von Greifzangen oder auch Schneidzangen bzw. -scheren. Beispielsweise wird diesbezüglich auf die DE 10 2011 052 926 A1 verwiesen. Aus dieser Patentanmeldung ist eine multifunktionale Zange bekannt, aufweisend im Bereich des Zangenmauls unterschiedliche Schneid- und Greifbereiche, deren Zangenschenkel über ein Verriegelungsteil zumindest in einer Stellung, insbesondere der Geschlossenstellung, festsetzbar sind. Das Verriegelungsteil ist in einem gelenknahen Bereich des ersten Zangenschenkels schwenkbar angeordnet, mit einer Schwenkachse, die gleichgerichtet ist zu der geometrischen Drehachse, um welche die Zangenschenkel drehbar sind. In der Festsetzungsstellung stützt sich der zweite Schenkel über eine in dessen Gelenkbereich ausgebildete Verriegelungsfläche an dem Verriegelungsteil ab. Die Schwenkverlagerbarkeit des Verriegelungsteiles ist gegeben durch einen an dem ersten Zangenschenkel befestigten Schwenkbolzen.

### Zusammenfassung der Erfindung

Im Hinblick auf den vorbeschriebenen Stand der Technik wird eine Aufgabe der Erfindung darin gesehen, eine Zange der in Rede stehenden Art insbesondere bezüglich der Verriegelung weiter zu verbessern.

Diese Aufgabe ist beim Gegenstand des Anspruches 1 gelöst, wobei darauf abgestellt ist, dass das Verriegelungsteil in der festgesetzten Stellung jedenfalls unter Belastung sowohl an dem Gelenkbereich des zweiten Zangenschenkels als auch an dem Griffbereich des ersten Zangenschenkels in einer Ebene senkrecht zu der Drehachse der Zangenschenkel in abstützender Anlage ist.

Etwaige in der verriegelten Zangenschließstellung, beispielsweise bei einem Versuch einer Öffnungsschwenkbewegung des zweiten Zangenschenkels relativ zu dem ersten Zangenschenkel in der Verriegelungsstellung, auf das Verriegelungsteil einwirkende werden zufolge der vorgeschlagenen Lösung über das Verriegelungsteil unmittelbar in den Griffbereich des ersten Zangenschenkels abgeleitet. Dies ist erreicht durch eine bevorzugt unmittelbare Abstützung des Verriegelungsteiles, zumindest in einer solchen Belastungsstellung, an dem Gelenkbereich des zweiten Zangenschenkels und an dem Griffbereich des ersten Zangenschenkels. Die Kraftein- und -überleitung kann hierbei, wie auch bevorzugt, im Wesentlichen in einer quer zur Drehachse der Zangenschenkel, wie weiter auch quer zur Schwenkachse des Verriegelungsteiles, ausgerichteten Ebene beziehungsweise in einer quer zur Drehachse und in Richtung der Drehachse übereinander liegenden Ebenenschar gegeben sein, darüber hinaus bevorzugt in einer sich aus der in Richtung der Drehachse sich ergebenden Dicke des zweiten Zangenschenkels in dessen sich an dem Verriegelungsteil abstützenden Gelenkbereichs.

Der Anbindungsbereich des Verriegelungsteiles an dem ersten Zangenschenkel bleibt bevorzugt hinsichtlich etwaiger auf diese Verbindung einwirkender Scherkräfte unbelastet. Zufolge dessen ist der Gefahr eines Lösens des Verriegelungsteiles beziehungsweise einer Aufhebung der Verriegelungsstellung allein durch Belastung des Verriegelungsteiles über die Zangenschenkel entgegengewirkt.

Gemäß einer bevorzugten Ausgestaltung kann vorgesehen sein, dass Bereiche, in welchen die Anlage gegeben ist, nur durch eine Gerade verbunden werden können, die mit radialem Abstand zu einer geometrischen Schwenkachse des Verriegelungsteils verläuft. Der radiale Abstand der Geraden zu der Schwenkachse kann einem Zwanzigstel bis einem Drittel, beispielsweise etwa einem Zehntel, der Länge der Geraden zwischen den Anlagebereichen entsprechen. Hierdurch kann über den einen anliegenden Zangenschenkel in der Verriegelungsstellung ein Drehmoment auf das Verriegelungsteil aufgebracht werden, welches (auch) aufgrund dieses aufgeprägten Drehmoments in die Anlagestellung am anderen Zangenschenkel belastet wird. Es ergibt sich hierdurch eine günstige Unterstützung zur unmittelbaren Ableitung von Kräften über das Verriegelungsteil bevorzugt in den Griffbereich des ersten Zangenschenkels.

In diesem Zusammenhang kann gemäß einer weiter vorgeschlagenen Ausgestaltung das Verriegelungsteil spielfrei an dem, die geometrische Schwenkachse aufweisenden Zapfen gelagert sein. Das Verriegelungsteil ist hierbei frei, zumindest über den benötigten Schwenkbereich zwischen Verriegelungsstellung und Entriegelungsstellung, um den Zapfen drehbar. Eine Bewegung quergerichtet zur Schwenkachse ist nicht vorgesehen, gegebenenfalls aber im Bereich üblicher Toleranzen bei Drehlagern.

In einer weiter bevorzugten Ausgestaltung kann vorgesehen sein, dass das Verriegelungsteil an dem ersten Zangenschenkel mittels eines Zapfens drehbar gehaltert ist. Es kann sich hierbei in üblicher Weise um einen insbesondere im Zusammenwirkungsbereich mit dem Verriegelungsteil kreiszylinderförmig gestalteten Stift handeln, darüber hinaus aber auch in Form eines Polygonstiftes.

Eine Drehaufnahme des Zapfens kann, wie bevorzugt, mit einem in der festgesetzten Stellung die genannte abstützende Anlage an dem Gelenkbereich des zweiten Zangenschenkels und zugleich bei Belastung an dem Griffbereich des ersten Zangenschenkels ermöglichenden Übermaß ausgebildet sein. Entsprechend ergibt sich im Bereich der Drehaufnahme des Zapfens ein Spielraum zur Ermöglichung einer Relativbewegung des Zapfens zu dem die Drehaufnahme bildenden Abschnitts.

So kann in einer möglichen Ausgestaltung die Drehaufnahme als Langloch ausgebildet sein, mit einer Quererstreckung, die im Wesentlichen angepasst ist an den Durchmesser des Zapfens und einer Längserstreckung, die einem Mehrfachen des Zapfendurchmessers entspricht.

So kann eine größte freie Länge des Langloches dem 1,1- bis 1,5-Fachen eines größten Durchmessermaßes des Zapfens entsprechen, so weiter beispielsweise dem 1,15- bis 1,2-Fachen.

In einer möglichen Ausgestaltung kann der Zapfen an dem ersten Zangenschenkel ausgebildet sein und die Drehaufnahme an dem Verriegelungsteil. Entsprechend ist bei einer solchen Ausgestaltung der Zapfen festgelegt an dem ersten Zangenschenkel, so weiter beispielsweise zufolge einer Vernietung oder Verschraubung. Das Verriegelungsteil weist die Drehaufnahme auf, beispielsweise in Form eines Langloches, die von dem Zapfen durchsetzt ist.

Auch kann das Verriegelungsteil in einem Querschnitt topfförmig ausgebildet sein und der Zapfen einen Topfboden durchsetzen. Der Topfboden kann der zugewandten Flachseite des ersten Zangenschenkels zugewandt angeordnet sein, wobei in einer möglichen Ausgestaltung die gegebenenfalls langlochförmig ausgebildete Drehaufnahme in dem Topfboden ausgebildet ist.

Ein Kopf des Zapfens, entsprechend das dem befestigungsseitigen Ende am ersten Zangenschenkel abgewandte Ende des Zapfens, kann in dem Verriegelungsteil versenkt angeordnet sein, entsprechend bevorzugt umgeben von der gegebenenfalls vollständig umlaufenden, in einer möglichen Ausgestaltung aber auch nur teilweise umlaufenden Topfwandung.

Auch kann das Verriegelungsteil in einem axialen Bereich, in welchem es in die abstützende Anlage versetzbar ist, hinsichtlich seiner Außenkontur im Wesentlichen kreisförmig gebildet sein. Insbesondere die in der Verriegelungsstellung in Abstützungsanlage zu dem Gelenkbereich des zweiten Zangenschenkels sowie zu dem Griffbereich des ersten Zangenschenkels kommenden Topfwandungsabschnitte sind bezüglich ihrer Außenkontur bevorzugt entlang eines Kreisbogenabschnittes geformt. Deren geometrischer Mittelpunkt kann insbesondere in der abstützenden Anlagestellung (Verriegelungsstellung) auf der geometrischen Schwenkachse des Verriegelungsteiles beziehungsweise der geometrischen Längsachse des Zapfens liegen.

Auch kann das Verriegelungsteil in dem Bereich mit kreisförmiger Außenkontur eine Abflachung aufweisen. Diese Abflachung definiert einen Entriegelungsbereich, zur Drehfreigabe des zweiten Zangenschenkels. Zur Entriegelung wird das Verriegelungsteil so um dessen Schwenkachse geschwenkt, dass die Abflachung in der Außenkontur dem Gelenkbereich des zweiten Zangenschenkels zugeordnet ist und so dessen Schwenkweg freigibt.

Die Abflachung kann in eine in der Topfwandung gebildete Ausnehmung übergehen. Es kann sich hierbei um einen freigeschnittenen Bereich der Topfwandung handeln. So kann weiter die Ausnehmung als Fenster gebildet sein.

Auch kann das Verriegelungsteil einen sich oberhalb des Bereichs der in der Verriegelungsstellung abstützenden Anlage erstreckenden Anschlagabschnitt ausbilden, der zur Griffinnenseite gerichtet ist. Der Anschlagabschnitt kann mit einem Zangenabschnitt zusammenwirken, zur Bildung eines definierten Anschlags des Verriegelungsteils. Der Anschlagabschnitt kann sich beispielsweise radial, bezogen auf die Schwenkachse des Verriegelungsteils, nach außen über die Topfwandung des Verriegelungsteils hinaus erstrecken, so beispielsweise mit einem dem 0,3- bis 0,7-Fachen, weiter beispielsweise mit einem dem 0,5-Fachen des Topfdurchmessers entsprechenden freien Überkragmaß.

So kann der Anschlagabschnitt in einer möglichen Ausgestaltung zur Begrenzung einer Drehung des Verriegelungsteils in die festzusetzende Stellung der Zange ausgebildet sein. Darüber hinaus kann auch eine Begrenzung der Drehung des Verriegelungsteiles in die Freigabestellung der Zange gegeben sein. In einer möglichen Ausgestaltung ist eine solche Begrenzung ermöglicht durch einen, mit Bezug auf einen Grundriss des Verriegelungsteiles, in welchem Grundriss sich die Schwenkachse des Verriegelungsteiles als Punkt darstellt, im Wesentlichen diametral gegenüberliegend zu dem vorbeschriebenen Anschlagabschnitt wandungsaußenseitig des Topfes vorgesehenen weiteren Anschlagbereich an dem Verriegelungsteil. Weiter kann beispielsweise hierzu ein auch zur Schwenkverlagerung des Verriegelungsteils nutzbarer Handhabungsbereich dienen.

Der Anschlagabschnitt kann zur Zusammenwirkung mit dem ersten Zangenschenkel ausgebildet sein. Entsprechend wirkt der Anschlagabschnitt in einer solchen Ausgestaltung im Wesentlichen mit demselben oder benachbarten Bereich des ersten Zangenschenkels zusammen wie der in Anlage tretende Mantelabschnitt des Verriegelungsteiles in der Verriegelungsstellung. Dieser der Abstützung des Verriegelungsteiles in der Beaufschlagungssituation dienende Rücken des Zangenschenkels ist bevorzugt Teil des insgesamt einstückig geformten Zangenschenkels.

Auch der die Zangenoffenstellung definierende Anschlagbereich kann mit diesem Zangenschenkelabschnitt zusammenwirken.

In einer weiter bevorzugten Ausgestaltung ist der Anschlagabschnitt zur Zusammenwirkung mit einer Griffhülle des ersten Zangenschenkels ausgebildet. Bevorzugt handelt es sich hierbei um eine aus Kunststoff gefertigte, aufgesteckte Griffhülle großer Wandstärke.

Die vor- und nachstehend angegebenen Bereiche beziehungsweise Wertebereiche oder Mehrfachbereiche schließen hinsichtlich der Offenbarung auch sämtliche Zwischenwerte ein, insbesondere in 1/10-Schritten der jeweiligen Dimension, gegebenenfalls also auch dimensionslos. Beispielsweise beinhaltet die Angabe 1,1- bis 1,5-Fach auch die Offenbarung von 1,2- bis 1,5-Fach, 1,1- bis 1,4-Fach, 1,2- bis 1,4-Fach, etc. Diese Offenbarung kann einerseits zur Eingrenzung einer genannten Bereichsgrenze von unten und/oder oben, alternativ oder ergänzend aber zur Offenbarung eines oder mehrerer singulärer Werte aus einem jeweiligen angegebenen Bereich dienen.

### Kurze Beschreibung der Zeichnungen

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist, und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: in perspektivischer Darstellung eine Zange in Schließstellung, betreffend eine erste Ausführungsform;
- Fig. 2: eine Teildarstellung der Zange in Draufsicht;
- Fig. 3: die Herausvergrößerung des Bereiches III in Figur 2, betreffend eine Verriegelungsstellung der Zange unter Nutzung eines Verriegelungsteils;
- Fig. 4: den Schnitt gemäß der Linie IV-IV in Figur 3;
- Fig. 5: den Schnitt gemäß der Linie V-V in Figur 4;
- Fig. 6: die Herausvergrößerung des Bereiches VI in Figur 5;
- Fig. 7: eine der Figur 6 entsprechende Detaildarstellung, eine Belastungsstellung betreffend;
- Fig. 8: eine der Figur 3 entsprechende Darstellung, betreffend die Entriegelungsstellung;
- Fig. 9: den Schnitt gemäß der Linie IX-IX in Figur 8;
- Fig. 10: den Schnitt gemäß der Linie X-X in Figur 9;
- Fig. 11: eine der Figur 5 im Wesentlichen entsprechende Darstellung, bei in Gebrauchsstellung der Zange aktivierter Verriegelung;
- Fig. 12: in einer Teilansicht eine Zange in weiterer Ausführungsform, betreffend die Schließstellung;
- Fig. 13: in einer weiteren Teilansicht eine Zange in einer dritten Ausführungsform, ebenfalls betreffend die Schließstellung;
- Fig. 14: in Ansicht eine in Schließstellung befindliche Zange in einer vierten Ausführungsform;
- Fig. 15: in einer fünften Ausführungsform eine weitere Zange in Ansicht, betreffend die Schließstellung;
- Fig. 16: eine der Figur 3 entsprechende Darstellung, eine weitere Ausführungsform in der Entriegelungsstellung betreffend;
- Fig. 17: eine der Figur 16 entsprechende Darstellung, die Verriegelungsstellung betreffend;
- Fig. 18: die Vergrößerung XVIII in Figur 17 in einer Schnittdarstellung gemäß Figur 7.

### Beschreibung der Ausführungsformen

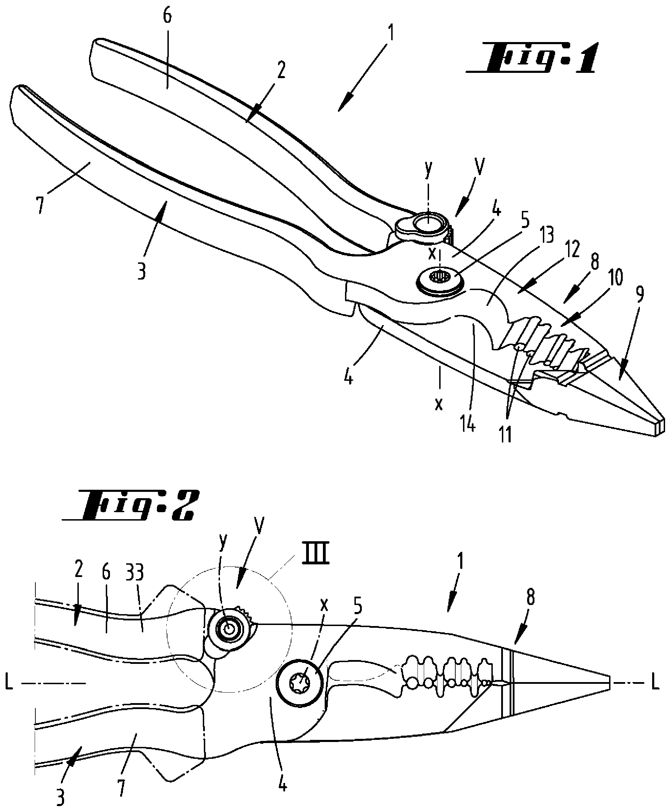

Dargestellt und beschrieben ist, zunächst mit Bezug zu Figur 1, eine Zange 1, die zwei, beispielsweise in Figur 2 nur teilweise dargestellte, Zangenschenkel 2 und 3 aufweist, die in einem Gelenkbereich 4 um eine geometrische Drehachse x drehbar zueinander gehaltert sind. Die geometrische Drehachse x ist gegeben durch einen die Zangenschenkel 3 und 3 in dem Gelenkbereich 4 durchsetzenden Gelenkbolzen 5.

Auf der einen Seite des Gelenkbereiches 4 bildet der erste Zangenschenkel 2 einen Griffbereich 6 und der zweite Zangenschenkel 3 einen Griffbereich 7 aus, während sich auf der anderen Seite des Gelenkbereiches 4 ein Zangenmaul 8 bildet.

Das Zangenmaul 8 kann im Einzelnen gemäß dem in den Figuren 1 bis 11 gezeigten ersten Ausführungsbeispiel hintereinander, d.h. bezogen auf eine Längslinie L-L, nacheinander ausgebildete, unterschiedliche Wirkbereiche aufweisen. So kann spitzenseitig, d.h. zugeordnet den freien Enden der Zangenschenkel 2 und 3 ein Flachbackenbereich 9 ausgeformt sein.

Gelenknah kann das Zangenmaul 8 einen Schneidbereich 12 aufweisen, mit einer ersten Schneide 13 an dem ersten Zangenschenkel 2 und einer zweiten Schneide 14 am zweiten Zangenschenkel 3.

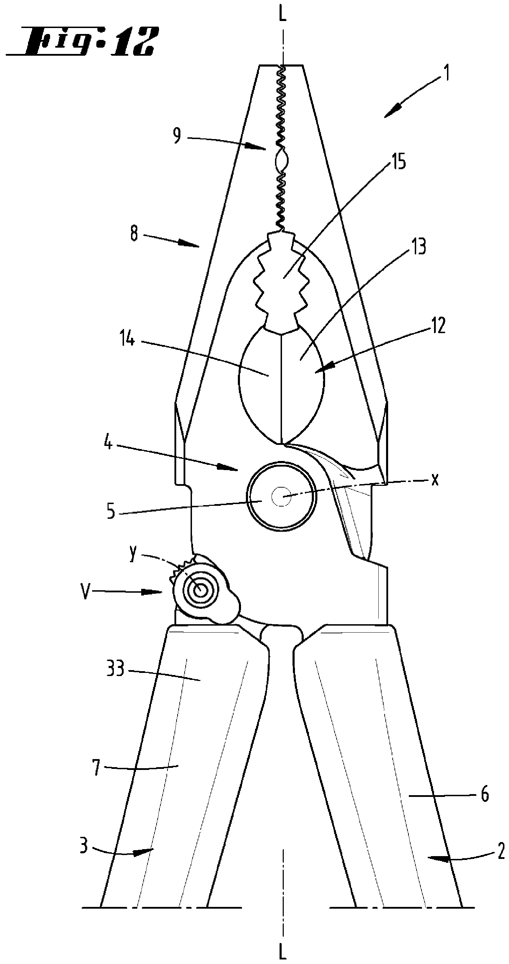

Zwischen dem Schneidbereich 12 und dem Flachbackenbereich 9 kann gemäß dem ersten Ausführungsbeispiel weiter ein Abisolierbereich 10 vorgesehen sein, aufweisend Schneidausbildungen 11 mit unterschiedlichen Durchmessern, zur Ermöglichung der Abisolierung von Drähten unterschiedlicher Querschnitte. Gemäß den Darstellungen in den Figuren 12 bis 15 kann die Zange 1 auch beispielsweise gemäß Figur 12 als sogenannte Kombinationszange ausgebildet sein, mit einem Schneidbereich 12 und einem Flachbackenbereich 9 sowie einen zwischen diesen Bereichen ausgebildeten Brennerloch 15.

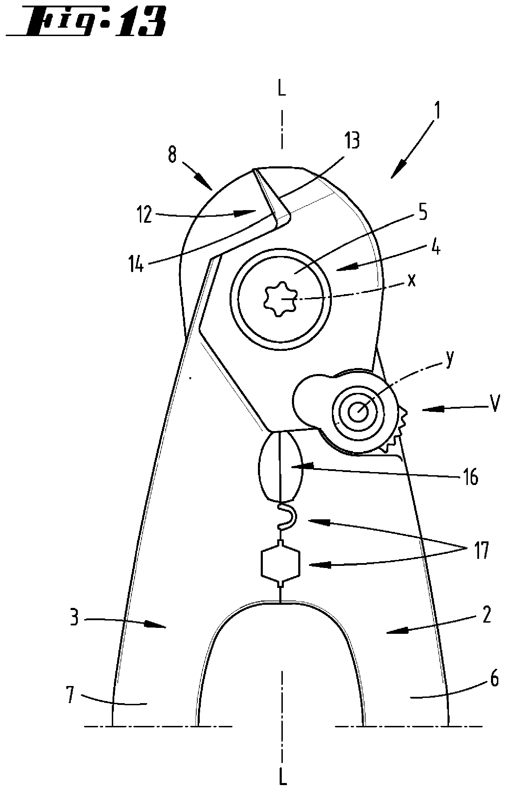

Darüber hinaus kann gemäß der Darstellung in Figur 13 die Zange 1 auch in Art einer Drahtseilschere ausgebildet sein, mit einem bezüglich der Drehachse x den Griffbereichen 6 und 7 gegenüberliegenden ersten Schneidbereich 12 und einem gelenknah zwischen den Griffbereichen 6 und 7 ausgebildeten zweiten Schneidbereich 16. Darüber hinaus können bei dieser Ausgestaltung entlang der Längsachse L-L folgend mehrere, hier zwei Crimpbereiche 17 vorgesehen sein.

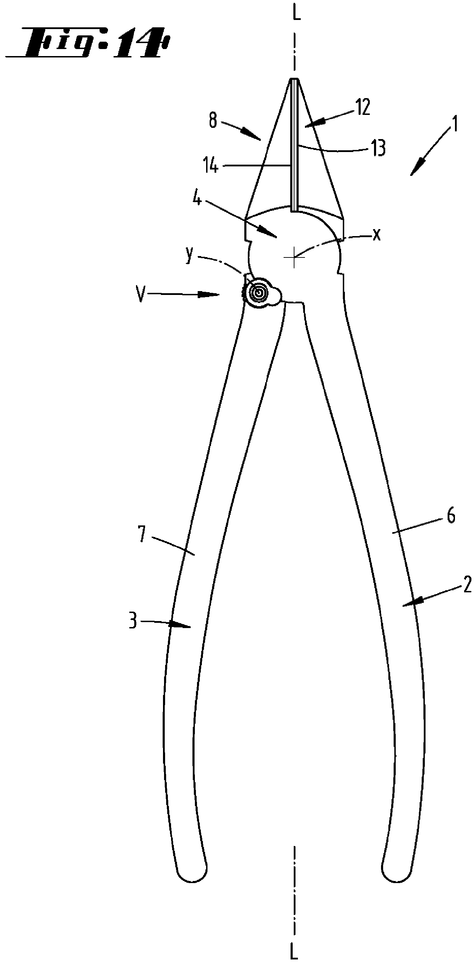

Figur 14 zeigt eine Zange 1 in Form einer Schneidzange, entsprechend aufweisend einen Schneidbereich 12.

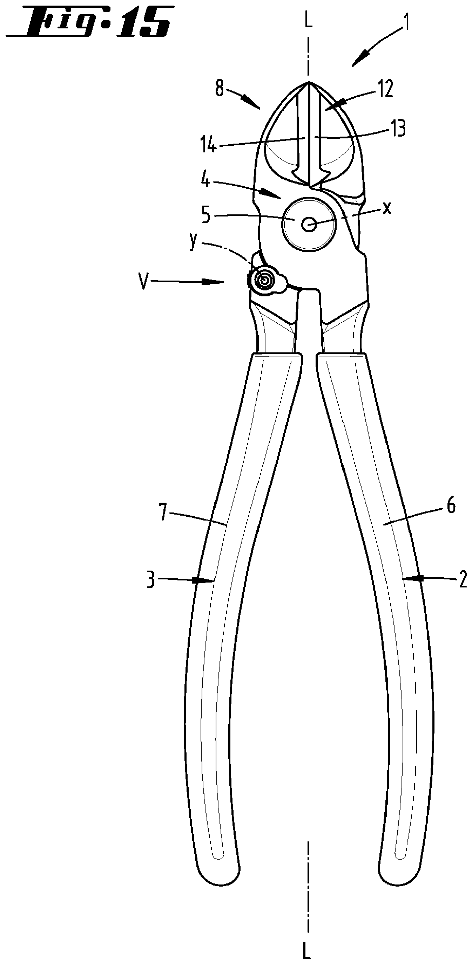

Eine Zange 1 in Art eines Seitenschneiders zeigt die Figur 15.

Darüber hinaus kann die Zange 1 auch in Art jeder Greifzange, Mitten- oder Vornschneider, Abisolierzange, Kabelzange, Crimpzange oder auch Abmantelungszange ausgebildet sein. Insbesondere kann die Zange 1 in Art einer Zange oder Schere ausgebildet sein, bei welcher die Zangenschenkel 2 und 3 sich in jeder Zangenschenkel-Schwenkstellungen in den Gelenkbereichen 4 überdecken.

Eine Stellung der Zangen 1, in dem dargestellten Ausführungsbeispiel die Geschlossenstellung gemäß Figur 1, ist durch ein Verriegelungsteil V festsetzbar.

Das Verriegelungsteil V ist an dem ersten Zangenschenkel 2 in einem Übergangsbereich 18 von dessen Griffbereich 6 zu dem Gelenkbereich 4 drehbar gehaltert. Die geometrische Schwenkachse y des Verriegelungsteils V ist gleichgerichtet der Drehachse x.

Im Übergangsbereich 18 ist an dem ersten Zangenschenkel 2 ein Zapfen 19 befestigt, aufweisend eine Längsachse, die im Wesentlichen die Schwenkachse y bildet. Der Zapfen 19 erstreckt sich ausgehend von dem ersten Zangenschenkel 2 beziehungsweise dessen Übergangsbereich 18 über die dem anderen Zangenschenkel 3 zugewandte Fläche hinaus.

Der Zapfen 19 trägt in den in den Figuren 1 bis 15 dargestellten Ausführungsformen das insgesamt im Wesentlichen topfförmige Verriegelungsteil V, hierbei den Topfboden 20 im Bereich eines hier ausgebildeten Langloches 21 durchsetzend. Das Langloch 21 bildet eine Drehaufnahme 22 des Zapfens 19.

Das Langloch 21 ist mit einem Breitenmaß b versehen, das im Wesentlichen dem Durchmessermaß d des Zapfens 19 entspricht. Das größte freie Längenmaß c, gemessen quer zur Breite b des Langloches 21 entspricht etwa dem 1,1- bis 1,2-Fachen des Zapfen-Durchmessers d.

Gemäß der Langlochausgestaltung der Drehaufnahme 22 ist das Verriegelungsteil V insgesamt zu dem den Topfboden 20 durchsetzenden Zapfen 19 um das Differenzmaß von Länge c und Durchmesser d relativ zu dem Zapfen 19 senkrecht zur Schwenkachse y schiebeverlagerbar.

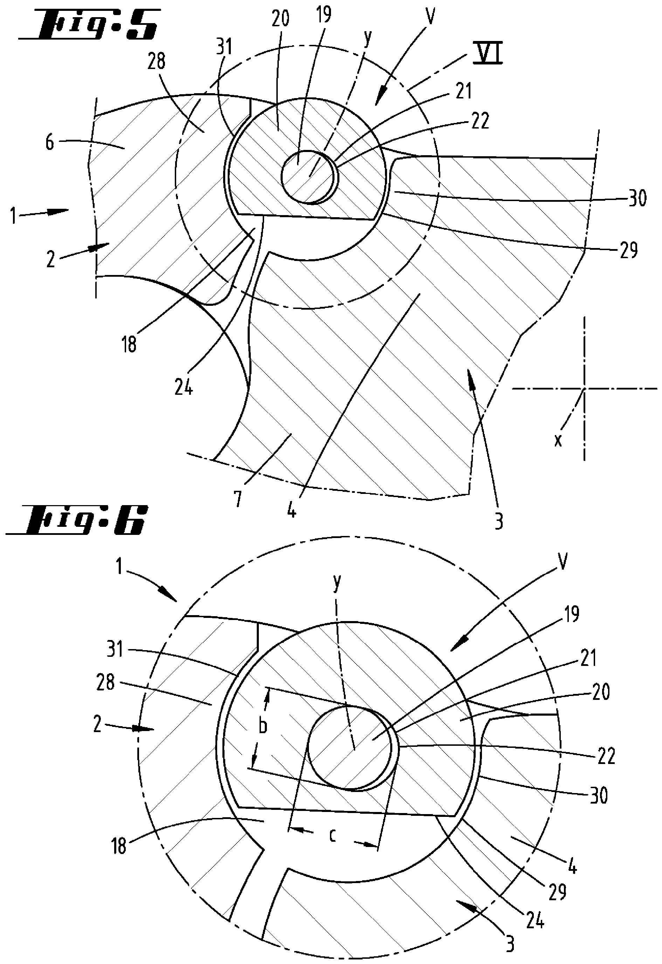

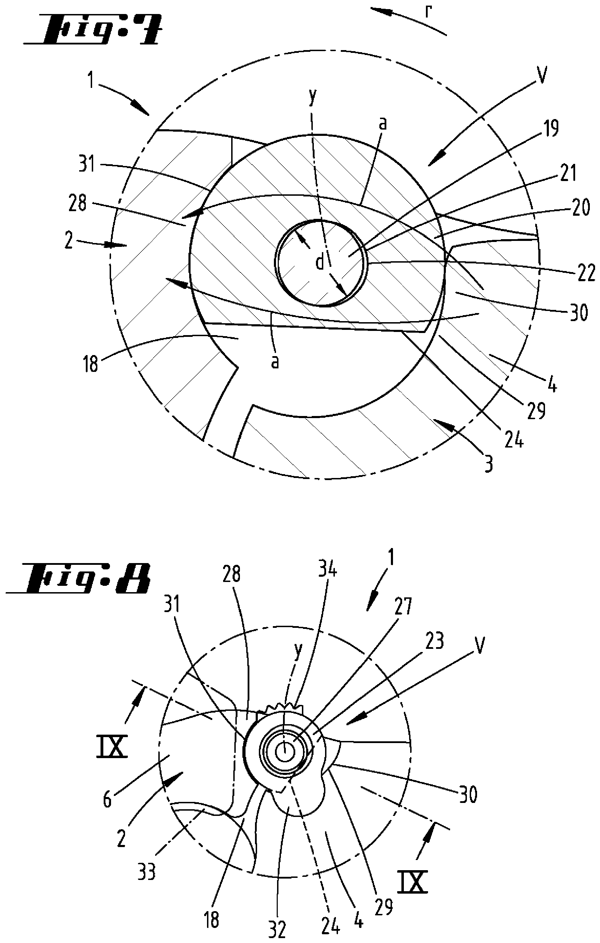

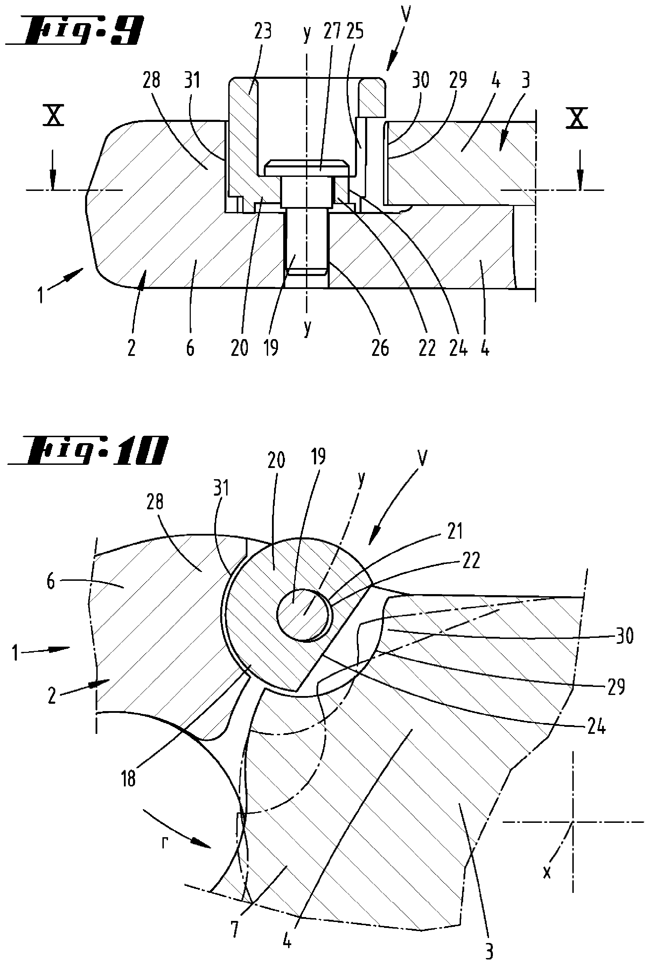

Das topfförmige Verriegelungsteil V weist eine auf dem Topfboden 20 aufstehende, dabei einstückig und materialeinheitlich mit dem Topfboden 20 ausgebildete, Topfwandung 23 auf. Diese ist, wie auch der Topfboden 20, mit Bezug auf einen Grundriss gemäß den Darstellungen beispielsweise in Figur 6 und 7, im Wesentlichen kreisrund, mit einer sekantenartig verlaufenden Abflachung 24. Im Bereich des Topfbodens 20 ergibt sich eine entlang der Sekante und in Richtung der Topfbodendicke erstreckende Flachseite. Im Bereich der Topfwandung 23 geht die Abflachung 24 in eine fensterartige Ausnehmung 25 über (vergleiche auch Figur 9).

Wie weiter aus Figur 9 zu erkennen, erstreckt sich diese Ausnehmung 25 in einer möglichen Ausgestaltung über die in Erstreckung der Drehachse x betrachtete Dicke des zugewandten Gelenkbereiches 4 des zweiten Zangenschenkels 3.

Das Verriegelungsteil V erstreckt sich gemäß dem dargestellten Ausführungsbeispiel in axialer Richtung über den zugewandten Gelenkbereich 4 des zweiten Zangenschenkels 3 hinaus, wobei diesbezüglich oberhalb der Ausnehmung 25 die Topfwandung 23 im Wesentlichen vollständig umlaufend ringförmig ausgebildet ist.

Der Zapfen 19 sitzt in dem dargestellten Ausführungsbeispiel im Übergangsbereich 18 des ersten Zangenschenkels 2 in einer entsprechend vorgesehenen Bohrung 26 ein. Der Zapfen 19 kann hier über eine Presspassung einsitzen, alternativ bei Ausbildung einer Gewindebohrung zufolge Verschraubung einsitzen. Darüber hinaus kann die Befestigung auch mittels eines Niets erfolgen.

Der über die Bohrung 26 hinaus und durch das Langloch 21 im Topfboden 20 weisende Kopf 27 des Zapfens 19 sitzt versenkt angeordnet in dem Verriegelungsteil V ein, dies in dem dargestellten Ausführungsbeispiel unter Ausformung einer tellerförmigen Radialerweiterung, die die Drehaufnahme 22 beziehungsweise das Langloch 21 überfängt.

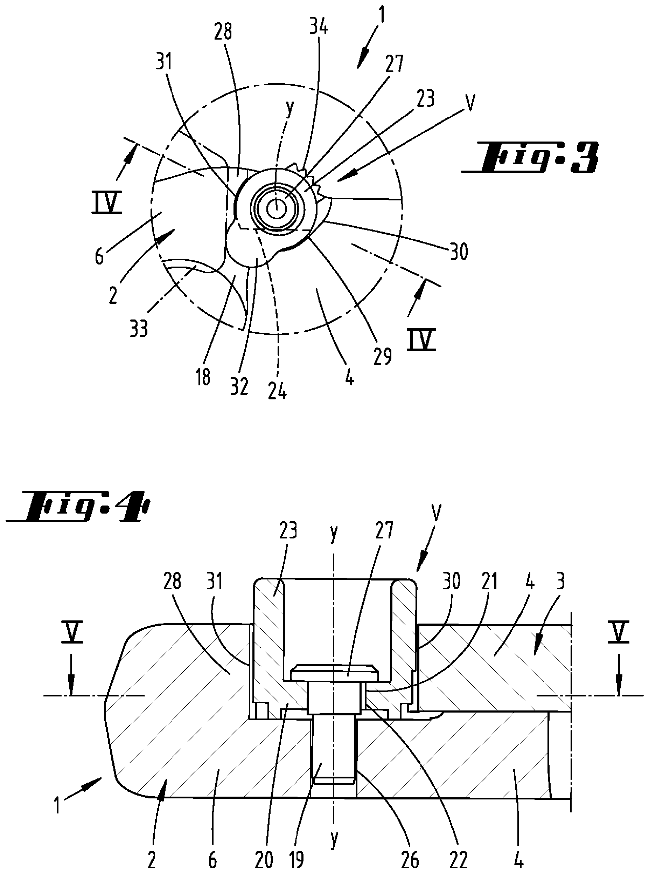

Mit Bezug auf die Verriegelungsstellung gemäß der Schnittdarstellung in Figur 4 ist gegenüberliegend zu dem dem Verriegelungsteil 4 zugewandten Abschnitt des Gelenkbereiches 4 des zweiten Zangenschenkels 3 an dem ersten Zangenschenkel 2 einstückig und materialeinheitlich eine Schulter 28 angeformt, die in dem dargestellten Ausführungsbeispiel Teil des diesbezüglichen Griffbereiches 6 des Zangenschenkels 2 ist. Die Schulter 28 erstreckt sich mit Bezug auf eine Querschnittdarstellung gemäß Figur 4 zumindest annähernd über dieselbe Höhe in Richtung der Schwenkachse y wie der dem Verriegelungsteil V zugewandte Abschnitt des Gelenkbereiches 4 des zweiten Zangenschenkels 3.

Das Verriegelungsteil V erstreckt sich mit dessen Topfwandung 23 und dem Topfboden 20 im Wesentlichen zwischen dem durch einen Freischnitt 29 freigestellten Abstützbereich 30 im Gelenkbereich 4 des zweiten Zangenschenkels 3 und dem durch die Schulter 28 im ersten Zangenschenkel 2 gebildeten Anlagebereich 31.

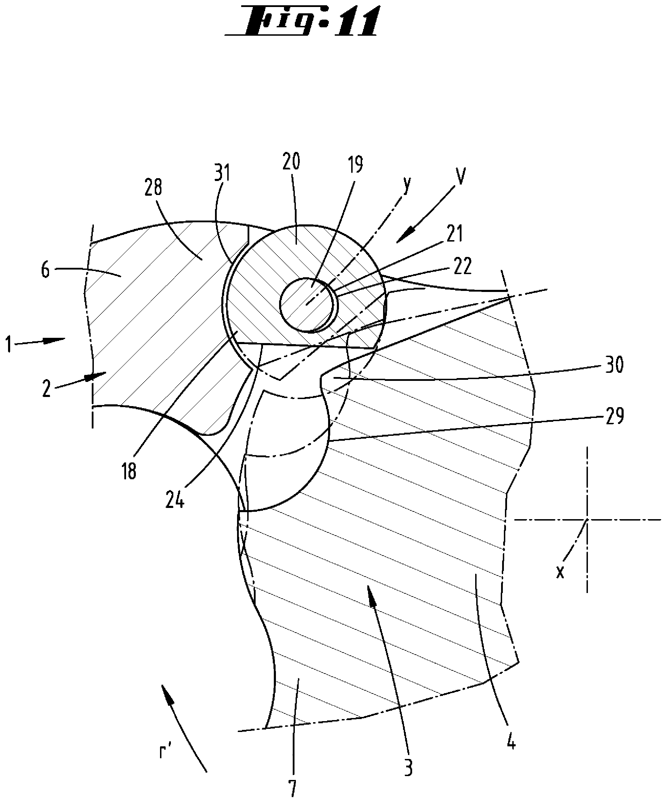

In der Verriegelungsstellung gemäß den Darstellungen in den Figuren 1 bis 6, wie auch bezüglich der weiteren Ausführungsbeispiele in den Figuren 11 bis 14, ist das Verriegelungsteil V so um dessen Schwenkachse y geschwenkt, dass unter Belassung eines Spalts zwischen der Mantelaußenfläche des Verriegelungsteiles V und der zugewandten, im Grundriss ebenfalls entlang eines Kreisbogenabschnittes sich ergebenden Fläche des Abstützbereiches 30 und des Anlagebereiches 31 von wenigen Zehntelmillimetern, beispielsweise 1 bis hin zu 8 Zehntelmillimetern, weiter beispielsweise etwa 5 Zehntelmillimetern, sich nahezu eine Flankierung der Abstütz- und Anlagebereiche 30, 31 zu der Mantelaußenfläche des Verriegelungsteiles V ergibt (vergleiche beispielsweise Figur 6).

Ein Versuch in dieser Verriegelungsstellung das Zangenmaul 8 unter Verlagerung des zweiten Zangenschenkels 3 relativ zum ersten Zangenschenkel 2 zu öffnen (Öffnungsrichtung r), führt zu einer Abstützung des Abstützbereiches 30 an der Mantelaußenfläche der Topfwandung 23 des Verriegelungsteiles V und gegebenenfalls nachfolgend, abhängig von der ursprünglichen Ausrichtung des Verriegelungsteiles V, zu einer durch das Zusammenwirken von Zapfen 19 und Langloch 21 geführten Schiebeverlagerung des Verriegelungsteiles V insgesamt in Richtung auf den Anlagebereich 31 der Schulter 28 im ersten Zangenschenkel 2, bis zu einer abstützenden Anlage des Verriegelungsteiles V an diesem Anlagebereich 31 (vergleiche Figur 7).

Der Zapfen 19 kann in einer solchen Abstützstellung in einer etwa mittigen Stellung bezüglich der Längsausrichtung des Langloches 21 sitzen, so dass die bei einem solchen Öffnungsversuch über den zweiten Zangenschenkel 3 und dessen Abstützbereich 30 auf das Verriegelungsteiles V einwirkende Kraft allein über das topfförmige Verriegelungsteiles V in den Anlagebereich 31 des ersten Zangenschenkels 2 geleitet wird. In Figur 7 ist mit den Linien a der Kraftfluss schematisch dargestellt.

Der Zapfen 19 ist in dieser Stellung von etwaigen, auf diesen einwirkenden Kräften, insbesondere Scherkräften, befreit. Das Verriegelungsteiles V ist jedenfalls unter Belastung sowohl an dem Anlagebereich 31, und somit an dem Griffbereich 6 des ersten Zangenschenkels 2, als auch an dem Abstützbereich 30, und somit an dem Gelenkbereich 4 des zweiten Zangenschenkels 3, in einer Ebene senkrecht zu der Schwenkachse y des Verriegelungsteiles V in abstützender Anlage.

Die Verriegelungsstellung kann, wie auch bevorzugt, durch eine Anschlagbegrenzung definiert sein. Hierzu weist das Verriegelungsteiles V in den dargestellten Ausführungsbeispielen einen sich oberhalb des Bereiches zur abstützenden Anlage erstreckenden Anschlagabschnitt 32 auf. Dieser ist mit Bezug auf die Schwenkachse y im Wesentlichen radial ausgerichtet und zumindest in der Verriegelungsstellung zur Griffinnenseite hin gerichtet.

Der Anschlagabschnitt 32 erstreckt sich in einer senkrecht zur Schwenkachse y betrachteten Ebene bevorzugt nahezu unmittelbar oberhalb der zugewandten Außenfläche des zweiten Zangenschenkels 3 im Gelenkbereich 4.

Der Anschlagabschnitt 32 ist ausgebildet zur Zusammenwirkung mit dem ersten Zangenschenkel 2, beispielsweise mit einer zugewandten Stirnfläche des Griffbereiches 6. Der Anschlagabschnitt 32 kann aber auch ausgebildet sein zur Zusammenwirkung mit einer zugewandten Stirnfläche einer den Griffbereich 6 übergreifenden Griffhülle 33 des ersten Zangenschenkels 2.

Weiter kann das Verriegelungsteil V mit Bezug auf einen Grundriss gemäß Figur 3 diametral gegenüberliegend zu dem Anschlagabschnitt 32 mantelwandaußenseitig einen gegenüber der Außenfläche der Topfwandung 23 erhabenen Betätigungsbereich 34 aufweisen. Dieser ist entsprechend im Wesentlichen zur Griffaußenseite gerichtet.

Der Betätigungsbereich 34 weist eine Strukturierung auf, die eine günstige Betätigung des Verriegelungsteiles V anbietet. Das Verriegelungssteil V kann so beispielsweise mit dem Daumen der die Zange 1 zugleich haltenden Hand betätigt werden. Es ist diesbezüglich einen Einhandbedienung ermöglicht.

Zugleich kann der Betätigungsbereich 34 in der Entriegelungsstellung gemäß den Darstellungen in den Figuren 8 bis 10 in Zusammenwirkung mit der zugewandten Fläche des Anlagebereiches 31 des ersten Zangenschenkels 2 einen Anschlag bilden.

In dieser Entriegelungsstellung ist das Verriegelungsteil V derart um die Schwenkachse y geschwenkt, dass die Abflachung 24 im Topfboden 20, wie auch die Ausnehmung 25 in der Topfwandung 23 dem Abstützbereich 30 des zweiten Zangenschenkels 3 zugewandt ausgerichtet sind, was ein Vorbeischwenken des Abstützbereiches 30 an dem Verriegelungsteil V zur Öffnung des Zangenmaules 8 und zur freien Beweglichkeit der Zangenschenkel 2 und 3 generell ermöglicht (siehe auch strichpunktierte Schwenkstellungen des zweiten Zangenschenkels 3 in Figur 10).

Auch bei Zangen 1, die über eine Rückstellfeder verfügen, über welche Rückstellfeder die Zangenschenkel 2 und 3 in eine Zangenmaul-Offenstellung gedrängt werden, bietet sich die vorgeschlagene Ausgestaltung und Anordnung des Verriegelungsteiles V an. Zufolge der Krafteinwirkung der Feder ist der zweite Zangenschenkel 3 in der verriegelten Zangen-Schließstellung über das Verriegelungsteil V an dem ersten Zangenschenkel 2 abgestützt, ohne dass der die Halterung des Verriegelungsteiles V an dem ersten Zangenschenkel 2 insgesamt bietende Zapfen 19 auf ihn einwirkende Kräfte aufnehmen muss.

Wie insbesondere aus Figur 11 zu erkennen, kann auch in einer Zangenoffenstellung das Verriegelungsteil V in die Verriegelungsstellung verbracht sein, ohne die Funktion der Zange 1 zu beeinträchtigen. Das Verriegelungsteil V kann im Zuge der Zangennutzung versehentlich in die Verriegelungsposition verbracht sein.

Aus der Zangenoffenstellung heraus wird in diesem Fall bei Verlagerung des zweiten Zangenschenkels 3 in Schließrichtung r' zufolge einer Dreh-Schlepp-Mitnahme unter Beaufschlagung der verriegelungsteilseitigen Abflachung 24 durch den Abstützbereich 30 das Verriegelungsteil V in die Entriegelungsstellung gemäß Figur 10 verlagert. Der zweite Zangenschenkel 3 bleibt frei drehbeweglich.

Allein eine (willensbetonte) Drehverlagerung des Verriegelungsteils V in die Verriegelungsstellung bei in Zangenschließstellung verbrachten Zangenschenkeln 2 und 3 bringt die gewünschte Zangenverriegelung.

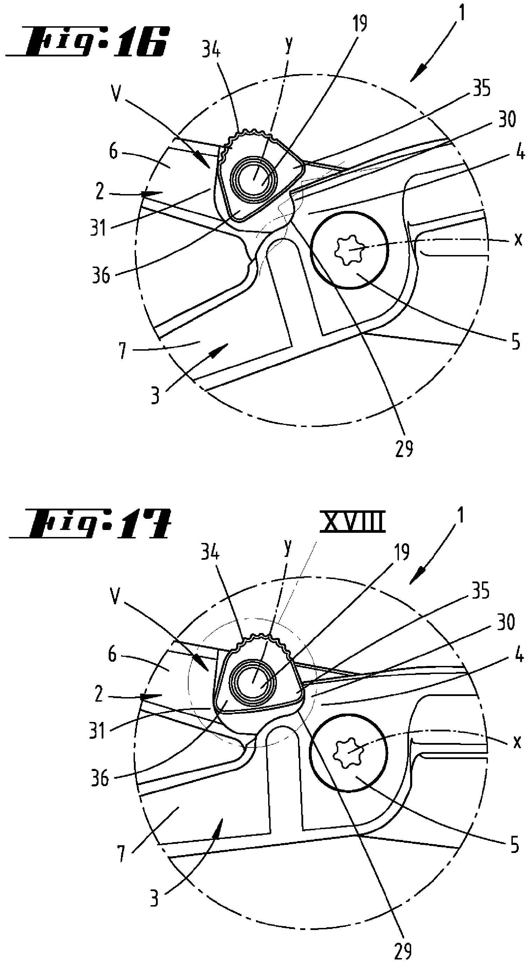

Die Figuren 16 bis 18 zeigen eine alternative Ausführungsform des Verriegelungsteils V, mittels welchem in gleicher Weise eine unmittelbare Ableitung von Kräften über das Verriegelungsteil V in den ersten Zangenschenkel 2 erreicht werden kann, entsprechend unter Nichtbelastung des Zapfens 19.

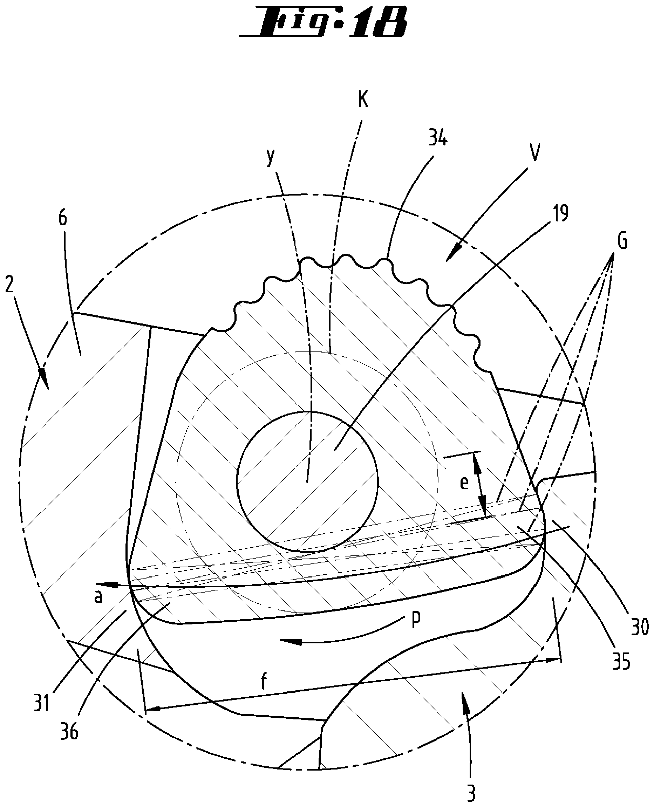

Das Verriegelungsteil V ist hierbei entgegen der vorbeschriebenen Ausführungsform, spielfrei an dem Zapfen 19 gelagert und weist, in der Verriegelungsstellung gemäß den Figuren 17 und 18 zwei, dem Abstützbereich 30 und dem Anlagebereich 31 zugewandte nockenartige Vorsprünge 35 und 36 auf. Diese ragen in radialer Richtung zu der Schwenkachse y über eine sich auf die Schwenkachse y beziehende Kreislinie K, wobei das Überstandsmaß über diese Kreislinie K hinaus des dem Abstützbereich 30 zugewandten Vorsprungs 35 etwa dem 2-Fachen des dem Anlagebereich 31 zugewandten Vorsprungs 36 entsprechen kann.

In der Verriegelungsstellung ist so eine unmittelbare Abstützung des zweiten Zangenschenkels 3 über das Verriegelungsteil V an dem ersten Zangenschenkel 2 erreichbar, wobei bei entsprechender Abstützung des Verriegelungsteils V über dessen Vorsprünge 35 und 36 an den Bereichen 30 und 31 ein Kraftfluss allein durch das Verriegelungsteil V erreichbar ist (siehe Linie a in Figur 18).

Aufgrund der Anordnung und Ausbildung der Vorsprünge 35 und 36 und/oder der korrespondierenden Abstütz- beziehungsweise Anlagebereiche 30 und 31 wird in der Verriegelungsstellung bei Krafteinwirkung über den zweiten Zangenschenkel 3 ein Drehmoment auf das Verriegelungsteil V in Richtung des Pfeiles p aufgeprägt und so der Vorsprung 36 entgegen einer Entriegelungs-Drehrichtung in die Anlagestellung an dem Anlagebereich 31 gedreht.

Die mit den Vorsprüngen 35 und 36 in Anlage befindlichen Anlagebeziehungsweise Abstützbereiche 30 und 31 können in der Verriegelungsstellung durch eine Schar an Geraden G miteinander verbunden werden (siehe Figur 18), welche Geraden G jeweils mit einem radialen Abstand e zu der Schwenkachse y verlaufen. Dieser radiale Abstand e kann dabei etwa einem Zehntel bis einem Fünftel, weiter beispielsweise etwa einem Siebtel der Länge f der Geraden G zwischen den Anlagepunkten entsprechen.

**Liste der Bezugszeichen**

| | | | |
|---|---|---|---|
| 1 | Zange | 27 | Kopf |
| 2 | erster Zangenschenkel | 28 | Schulter |
| 3 | zweiter Zangenschenkel | 29 | Freischnitt |
| 4 | Gelenkbereich | 30 | Abstützbereich |
| 5 | Gelenkbolzen | 31 | Anlagebereich |
| 6 | Griffbereich | 32 | Anschlagabschnitt |
| 7 | Griffbereich | 33 | Griffhülle |
| 8 | Zangenmaul | 34 | Betätigungsbereich |
| 9 | Flachbackenbereich | 35 | Vorsprung |
| 10 | Abisolierbereich | 36 | Vorsprung |
| 11 | Schneidausbildung | | |
| 12 | Schneidbereich | a | Linie |
| 13 | erste Schneide | b | Breite |
| 14 | zweite Schneide | c | Länge |
| 15 | Brennerloch | d | Durchmesser |
| 16 | Schneidbereich | e | Abstand |
| 17 | Crimpbereich | f | Länge |
| 18 | Übergangsbereich | p | Pfeil |
| 19 | Zapfen | r | Öffnungsrichtung |
| 20 | Topfboden | r' | Schließrichtung |
| 21 | Langloch | x | Drehachse |
| 22 | Drehaufnahme | y | Schwenkachse |
| 23 | Topfwandung | G | Gerade |
| 24 | Abflachung | K | Kreislinie |
| 25 | Ausnehmung | L | Längslinie |
| 26 | Bohrung | V | Verriegelungsteil |

## Patentansprüche

1. Zange (1) mit einem ersten und einem zweiten Zangenschenkel (2, 3), die in einem Gelenkbereich (4) um eine Drehachse (x) drehbar zueinander gehaltert sind und auf einer Seite des Gelenkbereiches (4) Griffbereiche (6, 7) ausbilden sowie auf der anderen Seite ein Zangenmaul (8), wobei eine Stellung der Zange (1), typischerweise eine Geschlossenstellung, durch ein Verriegelungsteil (V) festsetzbar ist, wobei weiter das Verriegelungsteil (V) an dem ersten Zangenschenkel (2) an einem Übergang von dem Griffbereich (6) zu dem Gelenkbereich (4) dieses Zangenschenkels (2) drehbar gehaltert ist und in der festgesetzten Stellung durch eine Anlage an dem Gelenkbereich (4) des zweiten Zangenschenkels (3) die Zange (1) festsetzt, **dadurch gekennzeichnet, dass** das Verriegelungsteil (V) in der festgesetzten Stellung jedenfalls unter Belastung sowohl an dem Gelenkbereich (4) des zweiten Zangenschenkels (3) als auch an dem Griffbereich (6) des ersten Zangenschenkels (2) in einer Ebene senkrecht zu der Drehachse (x) der Zangenschenkel (2, 3) in abstützender Anlage ist.

2. Zange nach Anspruch 1, **dadurch gekennzeichnet, dass** Bereiche, in welchen die Anlage gegeben ist, nur durch eine Gerade (G) verbunden werden können, die mit radialem Abstand (e) zu einer geometrischen Schwenkachse (y) des Verriegelungsteils (V) verläuft.

3. Zange nach einem der vorhergehenden Ansprüche, **dadurch gekennzeichnet, dass** das Verriegelungsteil (V) an dem ersten Zangenschenkel (2) mittels eines Zapfens (19) drehbar gehaltert ist, wobei, bevorzugt, das Verriegelungsteil (V) an dem Zapfen (19) spielfrei gelagert ist.

4. Zange nach Anspruch 3, **dadurch gekennzeichnet, dass** eine Drehaufnahme (22) des Zapfens (19) mit einem in der festgesetzten Stellung die genannte abstützende Anlage ermöglichenden Übermaß ausgebildet ist.

5. Zange nach Anspruch 4, **dadurch gekennzeichnet, dass** die Drehaufnahme (22) als Langloch (21) ausgebildet ist, wobei, bevorzugt, eine größte freie Länge (c) des Langlochs (21) dem 1,1- bis 1,5-Fachen eines größten Durchmessermaßes (d) des Zapfens (19) entspricht.

6. Zange nach einem der Ansprüche 3 bis 5, **dadurch gekennzeichnet, dass** der Zapfen (19) an dem ersten Zangenschenkel (2) ausgebildet ist und die Drehaufnahme (22) an dem Verriegelungsteil (V).

7. Zange nach einem der Ansprüche 3 bis 6, **dadurch gekennzeichnet, dass** das Verriegelungsteil (V) in einem Querschnitt topfförmig ausgebildet ist und der Zapfen (19) einen Topfboden (20) durchsetzt.

8. Zange nach einem der Ansprüche 3 bis 7, **dadurch gekennzeichnet, dass** ein Kopf (27) des Zapfens (19) in dem Verriegelungsteil (V) versenkt angeordnet ist.

9. Zange nach einem der vorhergehenden Ansprüche, **dadurch gekennzeichnet, dass** das Verriegelungsteil (V) in einem axialen Bereich, in welchem es in die abstützende Anlage versetzbar ist, hinsichtlich seiner Außenkontur im Wesentlichen kreisförmig gebildet ist, wobei, bevorzugt, das Verriegelungsteil (V) in dem Bereich mit kreisförmiger Außenkontur eine Abflachung (24) aufweist.

10. Zange nach Anspruch 9, **dadurch gekennzeichnet, dass** die Abflachung (24) in eine in der Topfwandung (23) gebildete Ausnehmung (25) übergeht, wobei, bevorzugt, die Ausnehmung (25) als Fenster gebildet ist.

11. Zange nach einem der vorhergehenden Ansprüche, **dadurch gekennzeichnet, dass** das Verriegelungsteil (V) einen sich oberhalb des Bereichs der in der Verriegelungsstellung abstützenden Anlage erstreckenden Anschlagabschnitt (32) ausbildet, der zur Griffinnenseite gerichtet ist.

12. Zange nach Anspruch 11, **dadurch gekennzeichnet, dass** der Anschlagabschnitt (32) zur Begrenzung einer Drehung des Verriegelungsteils (V) in die festzusetzende Stellung der Zange (1) ausgebildet ist.

13. Zange nach einem der Ansprüche 11 oder 12, **dadurch gekennzeichnet, dass** der Anschlagabschnitt (32) zur Zusammenwirkung mit dem ersten Zangenschenkel (2) ausgebildet ist.

14. Zange nach Anspruch 13, **dadurch gekennzeichnet, dass** der Anschlagabschnitt (32) zur Zusammenwirkung mit einer Griffhülle (33) des ersten Zangenschenkels (2) ausgebildet ist.

## Claims

1. A pair of pliers (1) with a first and a second plier leg (2, 3), which are mounted so as to be rotatable relative to one another about an axis of rotation (x) in a joint region (4), wherein said plier legs form gripping regions (6, 7) on one side of the joint region (4) and a plier jaw (8) on the other side, wherein a position of the pliers (1), typically a closed position, can be fixed by means of a locking part (V), and wherein the locking part (V) furthermore is rotatably mounted on the first plier leg (2) at a transition from the gripping region (6) to the joint region (4) of this plier leg (2) and in the fixed position fixes the pliers (1) by contacting the joint region (4) of the second plier leg (3), **characterized in that** the locking part (V) is in the fixed position and in any case under load in supporting contact with the joint region (4) of the second plier leg (3), as well as with the gripping region (6) of the first plier leg (2), in a plane extending perpendicular to the axis of rotation (x) of the plier legs (2, 3).

2. The pair of pliers according to claim 1, **characterized in that** regions, in which the contact takes place, can only be connected by a straight line (G) that extends at a radial distance (e) from a geometric pivoting axis (y) of the locking part (V).

3. The pair of pliers according to one of the preceding claims, **characterized in that** the locking part (V) is rotatably mounted on the first plier leg (2) by means of a pin (19), wherein, preferably, the locking part (V) is mounted on the pin (19) without clearance.

4. The pair of pliers according to claim 3, **characterized in that** a rotary receptacle (22) of the pin (19) is realized with an oversize that in the fixed position allows the aforementioned supporting contact.

5. The pair of pliers according to claim 4, **characterized in that** the rotary receptacle (22) is realized in the form of an oblong hole (21), wherein, preferably, a maximum clear length (c) of the oblong hole (21) preferably corresponds to between 1.1-times and 1.5-times a maximum diameter dimension (d) of the pin (19).

6. The pair of pliers according to one of the claims 3 to 5, **characterized in that** the pin (19) is formed on the first plier leg (2) and the rotary receptacle (22) is formed on the locking part (V).

7. The pair of pliers according to one of the claims 3 to 6, **characterized in that** the locking part (V) is in a cross section realized in a pot-shaped manner and the pin (19) extends through a pot base (20).

8. The pair of pliers according to one of the claims 3 to 7, **characterized in that** a head (27) of the pin (19) preferably is arranged in the locking part (V) in a sunk manner.

9. The pair of pliers according to one of the preceding claims, **characterized in that** the locking part (V) is with respect to its outer contour realized in an essentially circular manner in an axial region, in which it can come in supporting contact, wherein, preferably, the locking part (V) preferably is provided with a flattening (24) in the region with a circular outer contour.

10. The pair of pliers according to claim 9, **characterized in that** the flattening (24) transforms into a recess (25) formed in the pot wall (23), wherein, preferably, the recess (25) is realized in the form of a window.

11. The pair of pliers according to one of the preceding claims, **characterized in that** the locking part (V) forms a stop section (32) that is directed toward the inner side of the handle and extends above the region of the supporting contact in the locking position.

12. The pair of pliers according to claim 11, **characterized in that** the stop section (32) is designed for limiting a rotation of the locking part (V) into the fixed position of the pliers (1).

13. The pair of pliers according to one of the claims 11 or 12, **characterized in that** the stop section (32) is designed for interacting with the first plier leg (2).

14. The pair of pliers according to claim 13, **characterized in that** the stop section (32) is designed for interacting with a handle cover (33) of the first plier leg (2).

## Revendications

1. Pince (1) comprenant une première et une deuxième branche de pince (2, 3) qui sont maintenues dans une région d'articulation (4) de manière à pouvoir tourner l'une par rapport à l'autre autour d'un axe de rotation (x) et qui forment des régions de poignée (6, 7) d'un côté de la région d'articulation (4) ainsi qu'une mâchoire de pince (8) de l'autre côté, dans laquelle une position de la pince (1), typiquement une position fermée, peut être bloquée par une pièce de verrouillage (V), dans laquelle en outre la pièce de verrouillage (V) est maintenue de manière pivotante à la première branche de pince (2) à un passage entre la région de poignée (6) et la région d'articulation (4) de cette branche de pince (2) et bloque la pince (1) dans la position bloquée par appui contre la région d'articulation (4) de la deuxième branche de pince (3), **caractérisée en ce que** dans la position bloquée, la pièce de verrouillage (V) est en appui de support, en tout cas sous charge, aussi bien contre la région d'articulation (4) de la deuxième branche de pince (3) que contre la région de poignée (6) de la première branche de pince (2), dans un plan perpendiculaire à l'axe de rotation (x) des branches de pince (2, 3).

2. Pince selon la revendication 1, **caractérisée en ce que** les régions dans lesquelles est fourni l'appui ne peuvent être reliées que par une droite (G) qui s'étend à une distance radiale (e) d'un axe de pivotement géométrique (y) de la pièce de verrouillage (V).

3. Pince selon l'une des revendications précédentes, **caractérisée en ce que** la pièce de verrouillage (V) est maintenue de manière pivotante à la première branche (2) de la pince au moyen d'un tourillon (19), la pièce de verrouillage (V) étant montée de préférence sans jeu sur le tourillon (19).

4. Pince selon la revendication 3, **caractérisée en ce qu'**un logement de pivotement (22) du tourillon (19) est réalisé avec un surdimensionnement permettant ledit appui de support dans la position bloquée.

5. Pince selon la revendication 4, **caractérisée en ce que** le logement de pivotement (22) est réalisé sous la forme d'un trou oblong (21), une longueur libre maximale (c) du trou oblong (21) correspondant de préférence à 1,1 à 1,5 fois une valeur maximale du diamètre (d) du tourillon (19).

6. Pince selon l'une des revendications 3 à 5, **caractérisée en ce que** le tourillon (19) est formé sur la première branche (2) de la pince et le logement de pivotement (22) est formé sur la pièce de verrouillage (V).

7. Pince selon l'une des revendications 3 à 6, **caractérisée en ce que** la pièce de verrouillage (V) est réalisée en forme de pot dans une section transversale et le tourillon (19) traverse un fond de pot (20).

8. Pince selon l'une des revendications 3 à 7, **caractérisée en ce qu'**une tête (27) du tourillon (19) est noyée dans la pièce de verrouillage (V).

9. Pince selon l'une des revendications précédentes, **caractérisée en ce que** la pièce de verrouillage (V) est de forme sensiblement circulaire quant à son contour extérieur dans une région axiale dans laquelle elle peut venir en appui de support, la pièce de verrouillage (V) présentant de préférence un méplat (24) dans la région de contour extérieur circulaire.

10. Pince selon la revendication 9, **caractérisée en ce que** le méplat (24) se poursuit par un évidement (25) formé dans la paroi du pot (23), l'évidement (25) étant de préférence formé comme une fenêtre.

11. Pince selon l'une des revendications précédentes, **caractérisée en ce que** la pièce de verrouillage (V) forme une partie de butée (32) qui s'étend au-dessus de la région de l'appui de support en position de verrouillage et qui est dirigée vers la face intérieure de la poignée.

12. Pince selon la revendication 11, **caractérisée en ce que** la partie de butée (32) est configurée pour limiter une rotation de la pièce de verrouillage (V) dans la position à bloquer de la pince (1).

13. Pince selon l'une des revendications 11 ou 12, **caractérisée en ce que** la partie de butée (32) est configurée pour coopérer avec la première branche de pince (2).

14. Pince selon la revendication 13, **caractérisée en ce que** la partie de butée (32) est configurée pour coopérer avec une gaine de poignée (33) de la première branche de pince (2).
